# EUROPEAN PATENT SPECIFICATION

(11) **EP 0 944 536 B1**
(45) Date of publication and mention of the grant of the patent: **07.03.2001**
(21) Application number: 97946229.8
(22) Date of filing: 05.12.1997
(51) Int. Cl.: B65D 63/08, F16L 3/12

(54) **STRAP BINDING**
BANDUMREIFUNG
DISPOSITIF DE FIXATION A COURROIE

(30) Priority: 12.12.1996 SI 9600365
(43) Date of publication of application: 29.09.1999
(73) Proprietor: Vojvoda, Drago, 6215 Divaca (SI)
(72) Inventor: Vojvoda, Drago, 6215 Divaca (SI)
(74) Representative: Viering, Jentschura & Partner
(86) International application number: SI9700034
(87) International publication number: WO9825837

(56) References cited:
- DE-U- 1 649 451
- GB-A- 817 045

## Description

The invention relates to a strap binding according to the precharacterizing part of claim 1.

For example, the above-mentioned strap binding is known from DE 1 649 451 U. Said strap binding comprises a stirrup bent in the form of the letter U, both ends of flanges of the said stirrup resting on the object to be strapped. Due to the action of the said binding strap when it is tightened up, the said stirrup is pressed against the surface of the object to be strapped. However, this known solution has a relatively important drawback, namely the flanges are not mutually connected, which results in the said flanges being spread apart and the connection being cut. Also a relatively great danger exists that the flanges with their sharp end surfaces might penetrate into the object to be strapped and thus damage the surface thereof.

If the above-mentioned drawbacks are taken into consideration, the aim of the invention is to create a strap binding which would allow a quick and easy tying and binding of objects of larger diameters, that are basically unknown in advance, without any need to have recourse to a special tool or more persons or specially adapted binding straps.

According to the invention, this is achieved by the features in the characterizing part of claim 1. Advantageous further embodiments are described in the subclaims.

The strap binding according to the invention comprises a stirrup which is formed as an elongated channel shaped in a cross-section esentially as a letter U and comprises a web and flanges standing approximately perpendicularly thereto which at each free end comprise cuffs arranged approximately perpendicularly thereto. The web is preferably formed centrically to its longitudinal and transversal axes, with a nut rim arranged perpendicularly thereto into which a holding, or better, a tightening screw is screwed. The latter comprises a suitably shaped screw-end at its first end and a suitably shaped holding portion subjected to the application purpose at its opposite end.

Said nut rim can alternatively be shaped as a nut welded onto the web. An eye bolt, a lifting eye bolt, an eyelet bolt or similar can be used as the holding or tightening screw. The screw-end of said screw can have a form of a chamfered end, a truncated cone point or similar.

When tying an object (P), a force exerted onto the binding strap via screw-end of the screw causes that, according to the principle of deep drawing, the screw-end essentially penetrates into the superposed layers of the binding strap thus creating a tensional and form-locking connection and ensuring good holding of said strap.

In the area of the nut rim each flange of the stirrup is formed with a preferably rectangular cutout extending from the web towards the cuff up to approximately half the length of each flange. The binding strap is led through the cutouts intended to strap or tie an object or a bundle of objects.

Moreover, in the transitional area of each flange into the cuff and preferably centrically to the web and coaxially with the holding or tightening screw, a rectangular cutout is formed the ends of which are folded inwards along the cuffs. The holding strap prevents the flanges from spreading when the binding strap is stretched.

In its lower rim area and axially to the screw below said cutout, each cuff is formed with a step extending from the edge of the cuff towards said cutout.

According to the invention it can be foreseen that each flange is formed with at least two through-holes extending perpendicularly thereto, which are preferably arranged symmetrically to the longitudinal axis of the screw and are intended for screws for fixing another beam or auxiliary means.

Furthermore, according to the invention each cuff can be formed with a pair of rectangular cutouts being distant from the center-line of the screw and intended to receive auxiliary fixing or binding straps.

The strap binding according to the invention can be made of a metal sheet according to the process of cold forming, or cast, whereby in the latter case it comprises a web arranged between the flanges and integral therewith, which prevents the flanges from spreading.

The invention is further described in more detail on the basis of the preferred embodiments, reference being made to the accompanying drawings, in which
- Fig. 1: shows an elevation of a strap binding according to the invention and
- Fig. 2: shows a strap binding of Fig. 1 in cross-section along the line II-II.

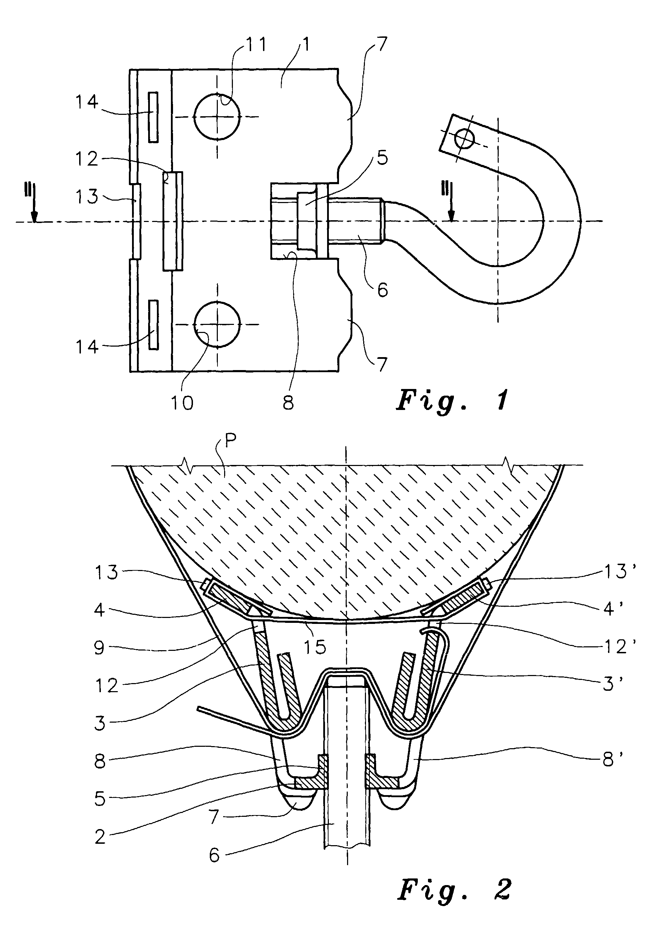

A stirrup 1 of the strap binding according to the invention is formed as an elongated channel shaped in a cross-section (Fig. 2) essentially as a letter U and comprises a web 2 and flanges 3, 3' standing approximately perpendicularly thereto and having at each free end cuffs 4, 4' arranged approximately perpendicularly thereto. The latter are intended to lie against an object or a bundle of objects P that is/are to be tied or tightened with a strap binding according to the invention, e.g. onto a concrete post of an electric conduit with a diameter that changes in length.

The web 2 is preferably formed centrically to its longitudinal and transversal axes with a nut rim 5 arranged perpendicularly thereto into which either a holding or a tightening screw 6 is screwed. The rim 5 is formed either by a process of deep drawing and additional cut-in of an internal thread or is just an ordinary nut welded to the web 2, for instance. At its first end, the screw 6 comprises a suitably shaped screw-end which can have a form of a chamfered end or a truncated cone point, at its opposite end there is a suitably shaped holding portion that is subjected to the application purpose. The screw 6 can be an eye bolt, a lifting eye bolt, an eyelet bolt or similar.

On the side averted from an object P the web 2 further comprises multiple bulges 7 arranged symmetrically to their longitudinal and transversal axes intended to support an auxiliary element resting against the web 2 on said side.

In the area of the nut rim 5 each flange 3, 3' is formed with a preferably rectangular cutout 8, 8' through which a primary binding strap 9 is led. Each cutout 8, 8' extends from the web 2 towards the cuff 4, 4' up to approximately half the length of each flange. Each flange 3, 3' is further formed with at least two through-holes 10, 11 extending perpendicularly thereto which are preferably arranged symmetrically to the longitudinal axis of the screw 6. The through-holes 10, 11 are intended for screws for fixing another beam or auxiliary means.

In the transition area of each flange 3, 3' into the cuff 4, 4' and preferably centrically to the web 2 and coaxially with the screw 6 preferably a rectangular cutout 12, 12' is formed. Each cuff 4, 4' is formed in its rim area and axially with the screw 6 below the cutout 12, 12' with a step 13, 13' extending from the edge of the cuff 4, 4' towards the cutout 12, 12'.

Each cuff 4, 4' is further formed with a pair of rectangular cutouts 14, 14' being distant from the center-line of the screw 6 and intended to receive secondary, i.e. auxiliary, fixing or binding straps, respectively.

The stirrup 1 is made of a metal sheet by means of the process of cold forming and punching. It can alternatively be made by means of casting or forging process and subsequent finishing of respective cutouts and holes. If the stirrup 1 is made of a metal sheet or forged, a holding strap 15 is led through the cutouts 12, 12' which is folded under the cuff 4, 4' at each end. The strap 15 prevents the flanges 3, 3' from spreading when an object or a bundle of objects P is tied or tightened with a strap binding according to the invention. If the stirrup 1 is cast, then also a respective web known *per se* and not shown is cast which connects both flanges 3, 3' thus making the strap 15 superfluous.

The strap binding according to the invention is fixed to an object P as follows (see Fig. 2). First, a strap 15 is led through the cutouts 12, 12', the ends of which are folded inwards along the cuffs 4, 4'. The screw 6 is screwed into the nut rim 5 to such depth that only a small portion of it projects out of the rim. Through the cutouts 8, 8' in each flange 3, 3' the binding strap 9 is led, the first end of which is folded through the cutout 12' (Fig. 2), e.g., inside the stirrup 1. The opposite, free end of the strap 9 is now led around the object P and pushed again through the cutouts 8, 8', this time from the opposite side. The free end of the strap 9 is kept tight either by hand or a suitable tool while the screw 6 is screwed until it rests with its screw-end against the superposed layers of the strap 9. When tightening the screw 6, the strap 9, in the area of acting of the screw-end of the screw 6, moves towards the object P thus being more and more tightened. When the force exerted by the screw-end of the screw 6 onto the strap 9 reaches a sufficient limit, the screw-end 6, according to the principle of deep drawing, essentially penetrates into the superposed layers of the strap 9 thus creating a tensionally and form-locking connection which offers good holding of the strap 9.

## Claims

1. A strap binding for tensional strapping of objects (P), for instance bars, rods and similar, said strap binding comprising a rigid stirrup (1) formed as an elongated channel shaped in a cross-section essentially as a letter U and comprising a web (2) and flanges (3, 3') standing approximately perpendicularly thereto and a binding strap (9) extending therethrough, said binding strap being led through the cutouts (8, 8') and around the object (P) that is to be tied, whereby the binding strap (9) is retained against falling out by means of a fixing screw (6) tensionally and in a form-locking way, ***characterised in*** that
- the flanges (3, 3') comprise at each free end cuffs (4, 4') arranged at an angle to lie against said object (P), said web (2) being formed with a nut rim (5), preferably central to the longitudinal and transversal axes of said web, so that each flange (3, 3') in the area of the nut rim (5) is formed with a cutout (8, 8'), preferably rectangular, extending from the web (2) towards the cuff (4, 4') up to approximately half the length of each flange; that in the transition area of each flange (3, 3') into the cuff (4, 4') a cutout (12, 12'), preferably rectangular, is formed, preferably in an axis central to the flange (3, 3'), and that each cuff (4, 4'), in its lower rim area and in an axis central to the flange (3, 3') below the cutout (12, 12'), is formed with a step (13, 13') extending from the edge of the cuff (4, 4') towards the cutout (12, 12'),
- the holding or tightening screw (6) is screwed into the nut rim (5) and comprises at its first end a suitably shaped screw-end and at its opposite end a holding portion that is shaped suitably and according to the application thereof, and
- a holding strap (15) is led through cutouts (12, 12') the ends of which are folded inwards along the cuffs (4, 4').

2. The strap binding according to claim 1, ***characterised in*** that each flange (3, 3') is formed with at least two through-holes (10, 11) extending perpendicularly thereto which are preferably arranged symmetrically to the longitudinal axis of the screw (6) and are intended for the screws for fixing another beam or auxiliary means.

3. The strap binding according to claim 1 or 2, ***characterised in*** that a force exerted onto the strap (9) via screw-end of the screw (6) causes that, according to the principle of the deep drawing, the screw-end essentially penetrates into the superposed layers of the strap (9) thus creating a tensional and form-locking connection and ensuring good holding of said strap.

4. The strap binding according to any of the preceding claims, ***characterised in*** that each cuff (4, 4') is formed with a pair of rectangular cutouts (14, 14') being distant from the center-line of the screw (6) and intended to receive secondary, i.e. auxiliary, fixing or binding straps, respectively.

5. The strap binding according to any of the preceding claims, ***characterised in*** that a web is arranged between the flanges (3, 3'), said web being integral with said flanges.

6. The strap binding according to any of the preceding claims, ***characterised in*** that the nut rim (5) is formed as a nut welded to the web (2).

7. The strap binding according to any of the preceding claims, ***characterised in*** that the screw (6) is an eye bolt, a lifting eye bolt, an eyelet bolt or similar.

8. The strap binding according to any of the preceding claims, ***characterised in*** that the screw-end of the screw (6) has a shape of a chamfered end, a truncated cone point or similar.

## Patentansprüche

1. Bandumreifung zum Festmachen von Objekten (P) durch mechanische Spannung, beispielsweise von Stäben, Stangen und ähnlichem, wobei die Bandumreifung einen starren Bügel (1) aufweist, der als ein verlängerter Kanal mit einem im wesentlichen wie der Buchstabe U gestalteten Querschnitt ausgebildet ist, und einen Steg (2) und Flansche (3, 3'), die ungefähr senkrecht dazu stehen, und ein sich dadurch erstreckendes Umreifungsband (9) aufweist, wobei das Umreifungsband (9) durch die Ausschnitte (8, 8') hindurch um das festzumachende Objekt (P) herumgeführt ist, wobei das Umreifungsband (9) mittels einer Befestigungsschraube (6) durch mechanische Spannung und durch Formschluss davon abgehalten wird, herauszufallen, ***dadurch gekennzeichnet,*** dass
- die Flansche (3, 3') an jedem freien Ende Manschetten (4, 4') aufweisen, die in einem Winkel zu dem Objekt (P) angeordnet sind, wobei der Steg (2) mit einem Muttern-Rand (5) versehen ist, vorzugsweise mittig der Längs- und Quer-Achse des Stegs, so dass jeder Flansch (3, 3') im Bereich des Muttern-Rands (5) mit einem Ausschnitt (8, 8') versehen ist, vorzugsweise rechtwinklig, der sich von dem Steg (2) in Richtung zu der Manschette (4, 4') bis ungefähr zur halben Länge jedes Flansches hin erstreckt; dass im Übergangsbereich jedes Flansches (3, 3') in die Manschette (4, 4') ein Ausschnitt (12, 12') vorzugsweise rechtwinklig ausgebildet ist, vorzugsweise in einer mittigen Achse der Flansche (3, 3'); und dass jede Manschette (4, 4') in ihrem unteren Randbereich und in einer mittigen Achse des Flansches (3, 3') unter dem Abschnitt (12, 12') mit einer Abstufung (13, 13') versehen ist, die sich vom Rand der Manschette (4, 4') in Richtung zu dem Ausschnitt (12, 12') erstreckt,
- die Halte- oder Festmach-Schraube (6) in den Muttern-Rand (5) hineingeschraubt wird und an ihrem ersten Ende ein zweckmäßig gestaltetes Schraubenende und an ihrem entgegengesetzten Ende einen Halteabschnitt aufweist, der zweckmäßig und entsprechend dessen Anwendung gestaltet ist, und
- ein Halteband (15) durch die Ausschnitte (12, 12') hindurchgeführt ist, dessen Enden nach innen hin entlang der Manschetten (4, 4') eingeklappt sind.

2. Bandumreifung nach Anspruch 1, ***dadurch gekennzeichnet,*** dass jeder Flansch (3, 3') mit mindestens zwei Durchgangslöchern (10, 11) versehen ist, die sich senkrecht dazu erstrecken, die vorzugsweise symmetrisch zur Längsachse der Schraube (6) angeordnet sind und für Schrauben zum Befestigen eines anderen Trägers oder von Hilfsmitteln bestimmt sind.

3. Bandumreifung nach Anspruch 1 oder 2, ***dadurch gekennzeichnet,*** dass eine über das Schraubenende der Schraube (6) auf das Band (9) ausgeübte Kraft bewirkt, dass gemäß dem Prinzip des Tiefziehens das Schraubenende im wesentlichen in die vorgelagerten Schichten des Bandes (9) eindringt, so durch mechanische Spannung und Formschluss eine Verbindung erzeugt und ein gutes Halten des Bandes sicherstellt.

4. Bandumreifung nach einem der vorangehenden Ansprüche, ***dadurch gekennzeichnet,*** dass jede Manschette (4, 4') mit einem Paar rechtwinkliger Ausschnitte (14, 14') versehen ist, die von der Mittellinie der Schraube (6) entfernt sind und dafür vorgesehen sind, sekundäre, das heißt behelfsmäßige Befestigungs- bzw. Umreifungsbänder aufzunehmen.

5. Bandumreifung nach einem der vorangehenden Ansprüche, ***dadurch gekennzeichnet,*** dass ein Steg zwischen den Flanschen (3, 3') angeordnet ist, wobei der Steg einstückig mit den Flanschen ausgebildet ist.

6. Bandumreifung nach einem der vorangehenden Ansprüche, ***dadurch gekennzeichnet,*** dass der Muttern-Rand (5) als eine an den Steg (2) angeschweißte Mutter ausgebildet ist.

7. Bandumreifung nach einem der vorangehenden Ansprüche, ***dadurch gekennzeichnet,*** dass die Schraube (6) eine Ösenschraube, eine Heißöse, ein ösenförmiger Bolzen oder ähnliches ist.

8. Bandumreifung nach einem der vorangehenden Ansprüche, ***dadurch gekennzeichnet,*** dass das Schraubenende der Schraube (6) die Gestalt eines abgerundeten Endes, der Spitze eines Kegelstumpfes oder ähnlichem hat.

## Revendications

1. Dispositif de fixation à courroie pour fixer sous tension des objets (P), par exemple des bâtons, des barres etc., ledit dispositif comprenant un étrier rigide (1) formé en titre d'un passage allongé de forme essentiellement comme la lettre U dans la coupe en transvers et comprenant une traverse (2) et des brides (3, 3') se trouvant dans une position approximativement perpendiculaire sur le même, et une courroie de fixage (9) s'étendant à travers le même, ladite courroie de fixage étant guidée à travers les découpures (8, 8') et autour de l'objet (P) à fixer, et la courroie à fixage (9) étant empêchée de se détacher par l'aide d'une vis de fixage (6) sous tension et à engagement positif, caractérisé en ce que
- les brides (3, 3') comprennent à chaque libre bout des manchettes (4, 4') arrangées à un angle à être inclinées contre ledit objet (P), ladite traverse (2) étant formée avec un bord d'écrou (5), de préférence dans une position centrale par rapport à l'axe longitudinale et transversale dudit écrou de fixage, de sorte que chaque bride (3, 3') dans la région du bord d'écrou (5) est formée avec une découpure (8, 8'), de préférence rectangulaire, s'étendant de la traverse (2) vers la manchette (4, 4') jusqu'à approximativement la moitié de la longueur de chaque bride; que dans la région de transition de chaque bride (3, 3') dans la manchette (4, 4') une découpure (12, 12'), de préférence rectangulaire, est formée, de préférence sur une axe centrale de la bride (3, 3'), et que chaque manchette (4, 4') est formée, dans sa région de bord inférieure et sur une axe centrale de la bride (3, 3') en-dessous de la découpure (12, 12'), avec un seuil (13, 13') s'étendant du bord de la manchette (4, 4') en direction de la découpure (12, 12'),
- la vis à support ou à serrage (6) est vissée dans le bord d'écrou (5) et comprend à son premier bout un bout de vis de forme convenable et au bout opposant un morceau de fixation de forme convenable et apte pour son application, et
- une courroie de fixation (15) est guidée à travers les découpures (12, 12'), et ses bouts sont pliés vers l'intérieur le long des manchettes (4, 4').

2. Le dispositif de fixation à courroie selon la revendication 1, caractérisé en ce que chaque bride (3, 3') est formée avec au moins deux trous de passage (10, 11) s'étendant de facon perpendiculaire sur les mêmes, qui sont arrangés de préférence de manière symmétrique par rapport à l'axe longitudinale de la vis (6) et servent aux vis pour fixer un autre support ou des moyens auxiliaires.

3. Le dispositif de fixation à courroie selon la revendication 1 ou 2, caractérisé en ce qu'une force exercée sur la courroie (9) à travers le bout de vis de la vis (6) fait que, suivant le principe de l'emboutissage, le bout de vis essentiellement pénètre dans les couches superposées de la courroie (9), créant ainsi une connection sous tension et à engagement positif et garantissant un bon fixage de ladite courroie.

4. Le dispositif de fixation à courroie selon une des revendications précédentes, caractérisé en ce que chaque manchette (4, 4') est formée avec une paire de découpures rectangulaires (14, 14') étant distantes de la ligne centrale de la vis (6) et qui servent à recevoir des courroies de fixage ou de ficelage secondaires, c'est-à-dire auxiliaires, respectivement.

5. Le dispositif de fixation à courroie selon une des revendications précédentes, caractérisé en ce qu'un écrou de fixage est arrangé entre les brides (3, 3'), ledit écrou de fixage étant intégré dans lesdites brides.

6. Le dispositif de fixation à courroie selon une des revendications précédentes, caractérisé en ce que le bord d'écrou (5) est formé en titre d'un écrou soudé à la traverse (2).

7. Le dispositif de fixation à courroie selon une des revendications précédentes, caractérisé en ce que la vis (6) est un boulon à oeillet, un anneau de levage, un piton fileté ou similaire.

8. Le dispositif de fixation à courroie selon une des revendications précédentes, caractérisé en ce que le bout de vis de la vis (6) a la forme d'un bout en biais, d'une pointe d'un tronc de cône ou similaire.
